# EUROPÄISCHE PATENTSCHRIFT

(11) **EP 2 724 911 B1**
(45) Veröffentlichungstag und Bekanntmachung des Hinweises auf die Patenterteilung: **01.04.2020**
(21) Anmeldenummer: 13185481.2
(22) Anmeldetag: 23.09.2013
(51) Int. Cl.: B60W 30/18, B60W 30/12, B60W 50/14, B62D 15/02

(54) **Fahrassistenzverfahren und Fahrassistenzsystem zur Erhöhung des Fahrkomforts**
Driving assistance method and driving assistance system for increasing driving comfort
Procédé d'assistance du conducteur et système d'assistance du conducteur permettant d'accroître le confort de conduite

(30) Priorität: 29.10.2012 DE 102012219721
(43) Veröffentlichungstag der Anmeldung: 30.04.2014
(73) Patentinhaber: ROBERT BOSCH GMBH, 70442 Stuttgart (DE)
(72) Erfinder: Niemz, Volker, 71277 Rutesheim (DE)

(56) Entgegenhaltungen:
- DE-A1- 10 101 651
- DE-A1-102008 000 629
- DE-A1-102011 100 907
- US-A1- 2007 063 875
- US-A1- 2012 169 513

## Beschreibung

### Stand der Technik

Die Erfindung betrifft ein Fahrassistenzverfahren zur Erhöhung des Fahrkomforts.

Gegenstand der Erfindung sind auch ein Computerprogramm, ein Fahrassistenzsystem und ein mobiles Sensorsystem, welche insbesondere zur Ausführung des Verfahrens geeignet sind.

Spurassistenzverfahren und -systeme sind im Stand der Technik bekannt. Beispielsweise werden Spurassistenzsysteme bei Autobahnfahrten eingesetzt, um den Fahrer auf längeren Strecken bei der Spurhaltung zu entlasten. Dabei werten sie Informationen über den Verlauf der Fahrspur aus, in welcher sich das Fahrzeug befindet und geben in dem Moment, wenn ein Verlassen der Spur droht, beispielsweise ein akustisches Signal an den Fahrer aus, oder nehmen sogar einen automatischen Lenkeingriff vor.

DE 10 2005 023 185 A1 zeigt einen Spurwechselassistent für Kraftfahrzeuge, bei dem bei einem geplanten Überholvorgang geprüft wird, ob ein Spurwechsel gefahrlos möglich ist. Wenn dies der Fall ist, wird eine Empfehlung für einen Spurwechsel über ein Display angezeigt.

DE 10 2009 021 283 A1 zeigt ein Verfahren, bei dem zunächst erfasst wird, auf welcher Fahrspur sich ein Fahrzeug befindet, und wenn die nebenliegende rechte Fahrspur frei ist, wird ein Spurwechsel auf die rechte Fahrspur empfohlen. Hierdurch soll eine Nutzung der Fahrspuren erzielt werden, die dem Rechtsfahrgebot folgt.

DE 103 27 869 A1 zeigt ein Navigationssystem, bei dem anhand von erfassten Fahrspurmarkierungen auf einer Straße die Fahrspur bestimmt wird, in der sich das Fahrzeug befindet. Über die Zielführung wird dem Fahrer ein Hinweis gegeben, die Fahrspur zu wechseln, wenn dieser abbiegen möchte.

DE 101 01 651 A1 bezieht sich auf ein Verfahren zur verkehrs- und/oder witterungsabhängigen Fahrzeugsteuerung, bei dem der aktuelle Verkehrs- und/oder Witterungszustand bestimmt und der zukünftige Verkehrs- und/oder Witterungszustand prognostiziert werden, jeweils wenigstens für einen fahrzeugbezogenen Wegenetzbereich, und eine Fahrzeugsteuerungsinformation in Abhängigkeit vom ermittelten aktuellen und prognostizierten zukünftigen Verkehrs- und/oder Witterungszustand erzeugt wird.

### Offenbarung der Erfindung

### Vorteile der Erfindung

Erfindungsgemäß umfasst ein Fahrassistenzverfahren zur Erhöhung des Fahrkomforts, dass ein Zustand eines zu befahrenden Streckenabschnitts und Fahrspuren des zu befahrenden Streckenabschnitts erfasst werden und eine Fahrspurempfehlung für den zu befahrenden Streckenabschnitt abgegeben wird.

Vorteilhaft ist, dass der Reisekomfort erhöht werden kann, ohne dass hierfür eine aufwendige Zusatzsensorik erforderlich ist.

Das Erfassen von Fahrspuren bedeutet beispielsweise Erfassen der Anzahl von Fahrspuren, Erfassen zuordenbarer Attribute von Fahrspuren, beispielsweise Gegenverkehr, Standstreifen, Pannenstreifen, Radweg, Linksabbiegerspur, Rechtsabbiegerspur, Geradeausspur, Mischungen daraus, Erfassen von zur Verfügung stehenden Spuren, Erfassen von Fahrspurzusammenführungen und von Fahrspuraufspaltungen und Erfassen der aktuellen Position des Fahrzeugs auf den Fahrspuren, beispielsweise, ob sich das Fahrzeug auf der am weitesten links befindlichen Fahrspur befindet, in der Mitte oder ähnliches.

Die Abgabe der Fahrspurempfehlung erfolgt durch eine geeignete Kommunikationsschnittstelle zum Fahrer, das heißt über ein HMI (Human Machine Interface). Beispielsweise kann vorgesehen sein, die Fahrspurempfehlung auf einer Anzeige auszugeben, insbesondere auf einem Head-Up-Display oder auf einem Head-Down-Display im Fahrzeug. Dem Verkehrsteilnehmer kann auch über ein Navigationsgerät oder über ein Smartphone die Information über die zu erwartende Fahrbahnbeschaffenheit und die Fahrspurempfehlung angezeigt werden. Die Anzeige kann eine perspektivische Ansicht, insbesondere eine Top-View-Anzeige umfassen, das heißt eine Draufsicht auf die Umgebung des Fahrzeugs. Die Darstellung kann rein virtuell ausgebildet sein oder mit einem realen Bild kombiniert werden.

Es kann vorgesehen sein, die erfassten Fahrspuren des zu befahrenden Streckenabschnitts darzustellen und die Fahrspurempfehlung durch eine hervorgehobene Darstellung einer der Fahrspuren anzuzeigen. Die Hervorhebung kann auch durch eine Darstellung eines Symbols, beispielsweise eines blinkenden Piktogramms, insbesondere in Form eines Pfeils erfolgen, das einer der ermittelten Fahrspuren, nämlich der empfohlenen Fahrspur überblendet wird. Alternativ hierzu oder zusätzlich hierzu kann vorgesehen sein, eine Nachricht auf der Anzeige auszugeben, die die Fahrspurempfehlung verbalisiert und darüber hinaus einen Grund hierfür nennt, beispielsweise in einer Form "Bitte wechseln Sie die Spur, *Schlechtwegstrecke* in 500 m." oder "Achtung! Schlaglöcher in 500 m, Empfehlung Spurwechsel nach links.". Alternativ hierzu oder zusätzlich hierzu kann vorgesehen sein, eine Sprachnachricht abzusetzen, welche beispielsweise über das Fahrzeugradio kommuniziert wird. Die Sprachnachricht kann eine Warnung wie oben beschrieben umfassen, oder auch in Form eines Gesprächs mit dem Fahrer erfolgen, in welchem dieser über die zu erwartende Fahrbahnbeschaffenheit informiert wird.

Durch die in den abhängigen Ansprüchen aufgeführten Maßnahmen sind vorteilhafte Weiterbildungen und Verbesserungen des im unabhängigen Anspruch angegebenen Verfahrens möglich.

Erfindungsgemäß ist vorgesehen, dass der erfasste Zustand des zu befahrenden Streckenabschnitts ein Vorhandensein von Schlaglöchern, Spurrinnen, Spurrillen, Splitt oder Schotter umfasst. Die Auswertung dieser Art der Fahrbahnbeschaffenheit ermöglicht eine Verbesserung des Reisekomforts, da das Fahrzeug auf Fahrbahnuntergründe navigiert werden kann, welche leiser sind oder auf welchen das Fahrzeug weniger stark schwankt.

Erfindungsgemäß erfolgt die Erfassung des Zustands des zu befahrenden Streckenabschnitts mittels einer Abfrage von fahrzeugeigens gespeicherten Zuständen. Für den Fall, dass der Zustand durch eine Abfrage von fahrzeugeigens gespeicherten Zuständen erfolgt, wird davon ausgegangen, dass der Fahrer durch mehrere Fahrten entsprechend eine Anzahl zur Verfügung stehender Spuren abgefahren hat, damit eine entsprechende Empfehlung abgeleitet werden kann. Eine Schildererkennung wird insbesondere durch optische Sensorsysteme und anschließender Bildverarbeitungssoftware durchgeführt. Die Schildererkennung umfasst insbesondere eine Erkennung der Hinweisschilder "Spurrillen" oder "Splitt, Schotter", welche auf eine Verschlechterung einer Fahrbahn hinweisen.

Besonders vorteilhaft ist die Erfassung des Zustands über ein sog. Cloud-Computing-System. Einzelne Fahrzeuge liefern nur sehr eingeschränkte lokale Informationen über die Qualität der Streckenabschnitte. Bei einem Cloud-System, welches im Rahmen der Erfindung auch kurz als eine Cloud bezeichnet sein kann, besteht der Vorteil, dass mittels einer Vielzahl von Sensorknoten eine große Menge von Daten erfasst werden können. Ein zentrales Element ist dabei die Vernetzung von Sensorinformationen einer Vielzahl von Fahrzeugen. Die große Menge an Daten wird über intelligente Data-Mining-Methoden ausgewertet und ergänzt und den Anwendern in einer aufbereiteten Form zur Verfügung gestellt. Durch die Zusammenführung in einer Cloud ist somit eine idealerweise exakte Karte der aktuellen Fahrbahnbeschaffenheit von Fahrspuren ermittelbar.

Nach einer bevorzugten Ausführungsform werden die dem Verkehrsteilnehmer bei einem Abruf, das heißt bei einer Abfrage bei dem Cloud-Computing-System die Informationen über die Fahrbahnbeschaffenheit des zu befahrenden Streckenabschnitts übermittelt. Die anfragenden Geräte müssen nicht zwangsläufig in einem Fahrzeug verbaut oder diesem Fahrzeug zugeordnet sein, sondern es können beliebige Geräte nutzbar sein. Anfragemöglichkeiten können insbesondere auch durch einen Web-Service bereitgestellt werden.

Bevorzugt wird die Fahrspurempfehlung dann abgegeben, wenn der zu erwartende Komfortgewinn einen Aufwand für den Fahrer übersteigt, das heißt es wird ein mit dem Fahrspurwechsel verbundener Stressfaktor berücksichtigt. Der Fahrer könnte durch ständige Fahrspurwechselvorgaben, deren Sinn er nicht erkennt, gestresst werden, was dem Reisekomfort und der Sicherheit im Straßenverkehr abträglich sein kann. Daher ist die Empfehlung lediglich dann vorgesehen, wenn das Navigationsziel bekannt ist und abzusehen ist, dass eine bestimmte Anzahl von Metern, bevorzugt Kilometern, auf einer bestimmten Fahrspur zurückgelegt wird. Auf einer Autobahn kann dies beispielsweise dann angezeigt sein, wenn mehr als ein Kilometer, zwei Kilometer oder fünf Kilometer Strecke auf der Fahrspur zurückgelegt werden. Bei mehrspurigen Stadt- oder Landstraßen kann beispielsweise ab einem Kilometer oder ab zwei Kilometern vorhersehbarer Strecke, ein derartiger Fahrspurwechsel angeregt werden.

Erfindungsgemäß werden den Fahrspuren von Streckenabschnitten Qualitäten zugeordnet, beispielsweise in Form von Abstufungen wie sehr gut, gut, normal, schlecht, sehr schlecht. Die Bewertung der Qualität kann beispielsweise durch Messung der Beanspruchungen der Stoßdämpfer des Fahrzeugs erfolgen, oder durch Auswertung der Initialsensorik, das heißt wie stark das Fahrzeug auf schlechtem Untergrund schwankt. Kriterien zur Erfassung der Qualitäten sind erfindungsgemäß zu berücksichtigen, ob das Fahrzeug auf Grund des Untergrundes schwankt und/oder wie laut das Fahrzeug auf der Fahrbahn abrollt. Derartige Informationen können über am Fahrzeug verbaute Sensoren leicht ermittelt werden, beispielsweise durch Auswertung von Sensorwerten zur Längsbeschleunigung, zur Querbeschleunigung und/oder von Dämpferwerten. Das Abrollen des Fahrzeugs auf dem Untergrund kann in Kategorien klassifiziert werden und zur Bewertung der Qualität herangezogen werden. Zusätzlich hierzu kann berücksichtigt werden, dass eine Fahrspur häufig mit Schnee bedeckt ist oder dass bei Regen besonders viel Wasser auf der Fahrspur steht. Die Bewertung der Qualität kann Fahrzeugintern oder in der Cloud erfolgen, da hierzu lediglich Eingangsdaten verschiedener Messsysteme benötigt werden.

Die gewonnene Information über die Fahrbahnbeschaffenheit wird durch Ortsangaben ergänzt, welche über Navigationssysteme bereitgestellt werden, die über GPS die aktuelle Fahrzeugposition in einer Karte ermitteln können. Derartige Navigationssysteme können in Fahrzeugen serienmäßig verbaut sein oder können beispielsweise in einem mobilen Gerät vorhanden sein, welches an das Fahrzeug anschließbar und zu diesen Zwecken geeignet ist. Bestehende Systeme sind über Softwarezusätze leicht um die notwendigen Funktionen erweiterbar.

Die erfasste Fahrkondition zu der befahrenen Fahrspur wird bei einem Web-Dienst, einem Internetserver, einem Cloud-System oder fahrzeugintern gespeichert.

Erfindungsgemäß werden weiterhin Computerprogramme vorgeschlagen, gemäß denen einige der hier beschriebenen Verfahren durchgeführt werden, wenn die Computerprogramme auf programmierbaren Computereinrichtungen ausgeführt werden. Bei einem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem mobilen Gerät ausführbar ist. Das mobile Gerät kann beispielsweise ein Smartphone, ein Tablet-PC, ein Notebook und/oder ein Navigationsgerät im Fahrzeug umfassen, das insbesondere einen Rechner, ein Display, ein Eingabegerät (HMI) und ein GPS-Modul aufweist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa auf einem Server oder einem Cloud-Computing-System zum Herunterladen bereitgestellt werden, zum Beispiel über ein Datennetzwerk wie das Internet oder eine Kommunikationsverbindung wie etwa eine Telefonleitung oder eine drahtlose Verbindung.

Nach einem weiteren Aspekt der Erfindung wird ein Fahrassistenzsystem zur Erhöhung des Fahrkomforts gemäß Anspruch 5 vorgeschlagen.

Das Fahrassistenzsystem stellt für den Verkehrsteilnehmer den eigentlichen Mehrwert dar und wird beispielsweise in ein Navigationsgerät integriert. Zur Anwendung der Fahrspurempfehlung ist es nicht notwendig, dass das Fahrzeug selbst geeignete Sensorsysteme zur Verfassung der Fahrbahnbeschaffenheit aufweist.

Das Modul zur Erfassung des Zustands oder kurz Zustandserfassungsmodul umfasst beispielsweise optische Sensorsysteme, ein Navigationsmodul und/oder eine Kommunikationsschnittstelle zu einem Web-Dienst, Internetserver oder Cloud-System und/oder hat Zugriff auf auf dem Fahrzeug abgespeicherte Sensorwerte oder Fahrspurqualitätsdatenbanken. Das Fahrspurerfassungsmodul umfasst ein Navigationsmodul und/oder optische Sensorsysteme. Die Steuereinheit umfasst eine Kommunikationsschnittstelle und/oder ein Speichermodul auf einem fahrzeuginternen Speichermedium.

Die Sensoren zur Erfassung des Zustands oder kurz Zustandserfassungssensoren umfassen insbesondere oben genannte fahrzeugeigene Sensoren und eine geeignete Auswerteeinheit.

Das mobile Sensorsystem ermittelt eine lokale Karte der Fahrbahnbeschaffenheit während der Fahrt, ohne dass dies den Fahrer beeinflusst oder der Fahrer aktiv handeln muss. Die lokalen Informationen über die Fahrbahnbeschaffenheit werden der Cloud übermittelt und zur Verfügung gestellt. Bei entsprechender Anzahl von Fahrzeugen, welche mit entsprechenden Umgebungserfassungseinrichtungen und Kommunikationseinheiten zur Übermittlung der Informationen ausgestattet sind, entsteht eine flächendeckende Karte über die Fahrbahnbeschaffenheiten der Fahrspuren.

### Kurze Beschreibung der Zeichnungen

Ausführungsbeispiele sind in den folgenden Zeichnungen dargestellt und werden in der nachfolgenden Beschreibung näher erläutert.

Es zeigen
- Figur 1: eine schematische Darstellung eines Fahrassistenzsystems und
- Figur 2: eine Darstellung einer Fahrspurempfehlung.

### Ausführungsformen der Erfindung

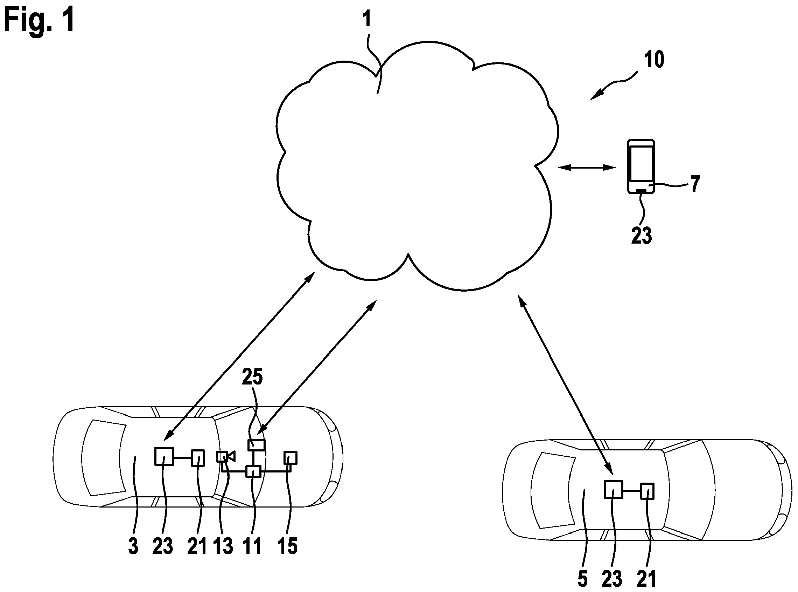

Figur 1 zeigt eine schematische Darstellung eines Systems 10 mit einem Cloud-Computing-System 1, einem ersten Fahrzeug 3, einem zweiten Fahrzeug 5 und einem mobilen Gerät 7. Das Cloud-Computing-System 1 im Rahmen der Erfindung umfasst eine Rechnerwolke, welche einen Nutzungszugang von virtualisierten Computer-Hardwareressourcen wie Rechner, Netzwerken und Speichern anbietet. Das Cloud-Computing-System 1 kann auch Software-on-Demand-Strukturen aufweisen, nämlich Rechnerwolken, welche Nutzungszugang von Softwaresammlungen und Anwendungsprogrammen bieten. Anstelle des Cloud-Computing-Systems kann ein Web-Dienst, ein GPS-Dienst oder ein Internetserver vorgesehen sein, welche sich ebenso zur Ausführung des erfindungsgemäßen Verfahrens eignen. Die Erfindung wird im Folgenden beispielhaft am Cloud-Computing-System 1 beschrieben.

Das Cloud-Computing-System 1 ist dazu eingerichtet, Informationen über die Beschaffenheit von Fahrspuren zu empfangen und in eine globale Karte von Fahrspuren aufzunehmen. Das Cloud-Computing-System 1 ist außerdem dazu eingerichtet, Informationen über die Beschaffenheit von Fahrspuren auf Anfrage, das heißt bei einem Abruf, anfragenden Verkehrsteilnehmern bereitzustellen. Es sammelt alle verfügbaren Informationen von Fahrzeugen und gegebenenfalls unter Anwendung von Data-Mining-Methoden aus dem Internet und trägt diese über eine geeignete Strategie in eine globale Karte ein. Manuell eingegebene Informationen und aus dem Internet gewonnene Informationen können über entsprechende Schnittstellen ebenfalls in die Karte der Cloud 1 integriert werden.

Das Cloud-Computing-System 1 kann über Kommunikationseinheiten 23 der Fahrzeuge 3, 5 und des mobilen Geräts 7 Daten von diesen empfangen und an diese übermitteln. Das Cloud-Computing-System 1 vernetzt hierzu das Fahrzeug mit Datenbanken, wobei die Kommunikation zum Beispiel über ein Handynetz, mittels einer eingebauten SIM-Karte oder über ein angekoppeltes mobiles Gerät, wie zum Beispiel ein Smartphone oder ein Handy, beispielsweise über GSM oder UMTS oder LTE erfolgen kann.

Die Kommunikationseinheiten 23 der Fahrzeuge 3, 5 sind eingerichtet, Informationen über die Fahrbahnbeschaffenheit von zu befahrenden Streckenabschnitten von dem Cloud-System 1 abzurufen und dem Verkehrsteilnehmer bereitzustellen. Insofern verkörpern die Kommunikationseinheiten 23 im Sinne der Erfindung Zustandserfassungsmodule und Steuereinheiten, die eingerichtet sind, anhand des erfassten Zustands des zu befahrenden Streckenabschnitts Fahrspurempfehlungen abzugeben. Die Fahrzeuge 3, 5 weisen außerdem jeweils ein Navigationsmodul 21 auf, welches die Position des jeweiligen Fahrzeugs 3, 5 ständig erfasst. Über das Navigationsmodul 21 erfolgt beispielsweise auch die Darstellung der von der Cloud 1 übermittelten Fahrbahnbeschaffenheit sowie bevorzugt auch die Interaktion mit dem Fahrer des Fahrzeugs 3, 5. Die Kommunikationsschnittstelle 23 kann ebenso eine Anzeige auf einem mobilen Gerät oder im Fahrzeug ansteuern oder eine Sprachnachricht absetzen oder auch ein Gespräch mit dem Verkehrsteilnehmer führen, um die gewünschten Informationen bereitzustellen.

Das erste Fahrzeug 3 weist außerdem eine Umgebungserfassungseinheit 11 auf, die hier beispielhaft dargestellt eine Frontkamera 13 umfasst. Die Umgebungserfassungseinrichtung 11 kann weitere Umgebungssensoren umfassen, beispielsweise Ultraschallsensoren, ein Kurzbereichsradarsystem, ein Infrarotsystem, PMD und/oder ein Lidar-System aber auch weitere Bildsensoren, insbesondere Heckkameras, BSD-Kameras, SVA-Kameras und/oder SVS-Kameras, welche beispielsweise von weiteren Fahrassistenzsystemen für andere Zwecke eingesetzt werden können.

Die Frontkamera 13 kann beispielsweise im Bereich hinter der Windschutzscheibe des Fahrzeugs 3, insbesondere in der Halterung des Innenspiegels positioniert sein. Zusätzlich können weitere Videosensoren beispielsweise im Bereich der Stoßfänger angeordnet werden. Hierdurch ist es möglich, das vordere Umfeld des Kraftfahrzeugs 3 zu erfassen. Bei optischen Sensoren wird bekanntermaßen eine Bildverarbeitungssoftware herangezogen, welche nicht dargestellt ist.

Die Frontkamera 13 liefert Informationen über Fahrbahnbeschaffenheiten von zu befahrenden Streckenabschnitten und Fahrspurinformationen. Die Umgebungserfassungseinrichtung 11 ist mit weiteren Sensoren 15 gekoppelt, welche Informationen über die Längsbeschleunigung, die Querbeschleunigung und/oder Dämpferwerte des Fahrzeugs bereitstellen. Auf Basis der Bilder der Frontkamera 13 und der Messdaten der zusätzlichen Sensorik 15 kann die Fahrqualität der Fahrspuren bewertet werden.

Das erste Fahrzeug 3 weist eine weitere Kommunikationseinheit 25 auf, die eingerichtet ist, ermittelte Informationen über die Fahrbahnbeschaffenheit von Fahrspuren an das Cloud-Computing-System 1 zu übertragen. Das erste Fahrzeug 3 weist damit ein mobiles Sensorsystem auf mit Sensoren zur Erfassung eines Zustands eines befahrenen Streckenabschnitts, einem Modul zur Erfassung von Fahrspuren des befahrenen Streckenabschnitts und mit einer entsprechenden Steuereinheit. Das zweite Fahrzeug 5 ist ohne Umgebungserfassungseinrichtung 11 und zugehörige Kommunikationseinheit 25 ausgestattet, liefert also keinen Beitrag zur globalen Karte in der Cloud, was im Rahmen der Erfindung möglich ist.

Das mobile Gerät 7 stellt beispielhaft eine weitere Einheit dar, welche mittels einer Kommunikationseinheit 23 lediglich dazu eingerichtet ist, Informationen über die Fahrbahnbeschaffenheit von dem Cloud-System 1 abzurufen und einem Verkehrsteilnehmer bereitzustellen.

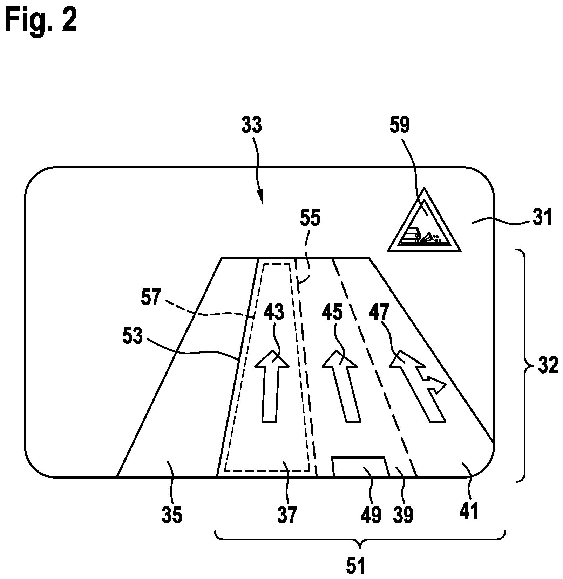

Figur 2 zeigt beispielhaft die Darstellung einer Fahrspurempfehlung, welche auf einer Anzeige 31, beispielsweise auf einem Head-Up-Display oder einem Head-Down-Display eines Ego-Fahrzeugs 49, einem Navigationsgerät oder auf einer Anzeige eines mobilen Geräts ausgegeben wird. Auf der Anzeige 31 ist ein zu befahrender Streckenabschnitt 32 einer Straße 33 dargestellt. Dargestellt ist die Straße 33 in perspektivischer Ansicht mit vier Fahrspuren 35, 37, 39, 41, wobei eine erste Fahrspur 35 eine Gegenfahrspur ist, eine zweite Fahrspur 37 eine linke Fahrspur für eine Geradeausfahrt, eine mittlere Fahrspur 39 ebenfalls für die Geradeausfahrt und eine rechte Fahrspur 41 für die Fahrt geradeaus und rechts ist, was durch entsprechende Fahrspurmarkierungen 43, 45, 47 auf den Fahrspuren angezeigt ist.

Das Ego-Fahrzeug 49 befindet sich auf der mittleren der Spuren 51, welche in der Fahrtrichtung des Ego-Fahrzeugs 49 verfügbar sind. Die Spur 35 des Gegenverkehrs ist durch eine durchgezogene Linie 53 von den verfügbaren Spuren 51 getrennt, wohingegen die verfügbaren Spuren 51 durch gestrichelte Linien 55 voneinander getrennt sind.

Die mittlere Spur 39, auf welcher sich das Ego-Fahrzeug 49 befindet, stellt sich als nachteilig in Bezug auf den Reisekomfort dar, da hier mit Splitt und Schotter zu rechnen ist, was die Lautstärke beim Abrollen auf der Fahrbahn erhöht. Dementsprechend wird eine Fahrspurwechselempfehlung abgegeben, welche hier beispielhaft dargestellt durch eine Hervorhebung 57 der linken Geradeausspur 37 erfolgt. Die Hervorhebung kann über verschiedene Arten erfolgen, beispielsweise durch Hervorhebung des Pfeils 43 oder durch Navigationsempfehlungen in Form von Text in weiteren Bereichen der Anzeige 31. Zusätzlich hierzu wird der Grund der Fahrspurwechselempfehlung dargestellt, in diesem Fall beispielsweise ein Piktogramm 59 in Form eines Verkehrszeichens eingeblendet, was auf Splitt und Schotter auf der Straße hinweist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Fahrassistenzverfahren zur Erhöhung des Fahrkomforts, wobei ein Zustand eines zu befahrenden Streckenabschnitts (32) und Fahrspuren (35, 37, 39, 41) des zu befahrenden Streckenabschnitts (32) erfasst werden und eine Fahrspurempfehlung (57) für den zu befahrenden Streckenabschnitt (32) abgegeben wird, wobei die Erfassung des Zustands des zu befahrenden Streckenabschnitts (32) mittels einer Abfrage von fahrzeugeigens gespeicherten Informationen erfolgt,
**dadurch gekennzeichnet, dass** der erfasste Zustand des zu befahrenden Streckenabschnitts (32) ein Vorhandensein von Schlaglöchern, Spurrinnen, Spurrillen, Splitt und/oder Schotter umfasst, dass den Fahrspuren (35, 37, 39, 41) von Streckenabschnitten Qualitäten zugeordnet sind und dass eine Lautstärke beim Abrollen des Fahrzeugs auf der Fahrbahn und/oder wie stark das Fahrzeug auf Grund des Untergrunds schwankt, zur Bewertung der Qualitäten herangezogen werden.

2. Verfahren nach Anspruch 1, **dadurch gekennzeichnet, dass** eine aktuelle Fahrkondition durch Auswertung von Sensorwerten ermittelt wird, welche Werte zur Längsbeschleunigung, Querbeschleunigung und/oder Dämpferwerte des Fahrzeugs bereitstellen.

3. Verfahren nach Anspruch 2, **dadurch gekennzeichnet, dass** die aktuelle Fahrkondition zu der befahrenen Fahrspur fahrzeugintern gespeichert wird.

4. Computerprogramm zur Ausführung eines der Verfahren nach einem der Ansprüche 1-3, wenn das Computerprogramm auf einer programmierbaren Computereinrichtung ausgeführt wird.

5. Fahrassistenzsystem (10) zur Erhöhung des Fahrkomforts mit einem Modul (23) zur Erfassung eines Zustands eines zu befahrenden Streckenabschnitts (32), einem Modul (23, 13) zur Erfassung von Fahrspuren (35, 37, 39, 41) des zu befahrenden Streckenabschnitts (32) einer Steuereinheit (21), die eingerichtet ist, anhand des erfassten Zustands des zu befahrenden Streckenabschnitts (32) Fahrspurempfehlungen (57) abzugeben, wobei die Erfassung des Zustands des zu befahrenden Streckenabschnitts (32) mittels einer Abfrage von fahrzeugeigens gespeicherten Informationen erfolgt,
**dadurch gekennzeichnet, dass** der erfasste Zustand des zu befahrenden Streckenabschnitts (32) ein Vorhandensein von Schlaglöchern, Spurrinnen, Spurrillen, Splitt und/oder Schotter umfasst, dass den Fahrspuren (35, 37, 39, 41) von Streckenabschnitten Qualitäten zugeordnet sind und dass eine Lautstärke beim Abrollen des Fahrzeugs auf der Fahrbahn und/oder wie stark das Fahrzeug auf Grund des Untergrunds schwankt, zur Bewertung der Qualitäten herangezogen werden.

## Claims

1. Driving assistance method for increasing driving comfort, wherein a state of a route section (32) which is to be travelled on and lanes (35, 37, 39, 41) of the route section (32) which is to be travelled on are sensed and a lane recommendation (57) is output for the route section (32) to be travelled on, wherein the sensing of the state of the route section (32) to be travelled on is carried out by means of interrogation of information stored about the vehicle in question;
**characterized in that** the sensed state of the route section (32) to be travelled on comprises the presence of pot holes, ruts, track grooves, chippings and/or gravel, **in that** the lanes (35, 37, 39, 41) of route sections are assigned qualities, and **in that** a volume during the rolling of the vehicle on the roadway and/or the extent to which the vehicle sways owing to the underlying surface are used for the evaluation of qualities.

2. Method according to Claim 1, **characterized in that** a current driving condition is determined by evaluating sensor values which make available values relating to the longitudinal acceleration, transverse acceleration and/or damper values of the vehicle.

3. Method according to Claim 2, **characterized in that** the current driving condition with respect to the lane being travelled on is stored vehicle-internally.

4. Computer programme for carrying out one of the methods according to one of Claims 1 to 3 when the computer programme is run on a programmable computer device.

5. Driving assistance system (10) for increasing driving comfort having a module (23) for sensing the state of a route section (32) to be travelled on, a module (23, 13) for sensing lanes (35, 37, 39, 41) of the route section (32), to be travelled on, of a control unit (21) which is configured to output lane recommendations (57) on the basis of the sensed state of the route section (32) to be travelled on, wherein the sensing of the state of the route section (32) to be travelled on is carried out by means of interrogation of information stored about the vehicle in question,
**characterized in that** the sensed state of the route section (32) to be travelled on comprises the presence of pot holes, ruts, track grooves, chippings and/or gravel, **in that** the lanes (35, 37, 39, 41) of route sections are assigned qualities, and **in that** a volume during the rolling of the vehicle on the roadway and/or the extent to which the vehicle sways owing to the underlying surface are used for the evaluation of qualities.

## Revendications

1. Procédé d'aide à la conduite destiné à accroître le confort de conduite, un état d'une portion de trajet (32) à parcourir et des voies de circulation (35, 37, 39, 41) de la portion de trajet (32) à parcourir étant détectés et une recommandation de conduite (57) pour la portion de trajet (32) à parcourir étant délivrée, la détection de l'état de la portion de trajet (32) à parcourir étant effectuée au moyen d'une interrogation d'informations mémorisées propres au véhicule,
**caractérisé en ce que** l'état détecté de la portion de trajet (32) à parcourir comprend une présence de nids de poule, d'ornières, de frayées, de gravier et/ou de gravillons, **en ce que** des qualités sont attribuées aux voies de circulation (35, 37, 39, 41) des portions de trajet et **en ce qu'**un volume sonore lors du passage en roulant du véhicule sur la chaussée et/ou l'intensité d'oscillation du véhicule en raison du sol sont utilisés pour l'évaluation des qualités.

2. Procédé selon la revendication 1, **caractérisé en ce qu'**une condition de conduite actuelle est déterminée par interprétation de valeurs de capteurs, lesquelles fournissent des valeurs à propos de l'accélération longitudinale, de l'accélération transversale et/ou des valeurs d'amortissement du véhicule.

3. Procédé selon la revendication 2, **caractérisé en ce que** la condition de conduite actuelle à propos de la voie de circulation parcourue est mémorisée en interne du véhicule.

4. Programme informatique destiné à mettre en œuvre l'un des procédés selon l'une des revendications 1 à 3 lorsque le programme informatique est exécuté sur un dispositif formant ordinateur.

5. Système d'aide à la conduite (10) destiné à accroître le confort de conduite, comprenant un module (23) destiné à détecter un état d'une portion de trajet (32) à parcourir, et un module (23, 13) destiné à détecter des voies de circulation (35, 37, 39, 41) de la portion de trajet (32) à parcourir, une unité de commande (21) qui est conçue pour délivrer, à l'aide de l'état détecté de la portion de trajet (32) à parcourir, une recommandation de conduite (57), la détection de l'état de la portion de trajet (32) à parcourir étant effectuée au moyen d'une interrogation d'informations mémorisées propres au véhicule,
**caractérisé en ce que** l'état détecté de la portion de trajet (32) à parcourir comprend une présence de nids de poule, d'ornières, de frayées, de gravier et/ou de gravillons, **en ce que** des qualités sont attribuées aux voies de circulation (35, 37, 39, 41) des portions de trajet et **en ce qu'**un volume sonore lors du passage en roulant du véhicule sur la chaussée et/ou l'intensité d'oscillation du véhicule en raison du sol sont utilisés pour l'évaluation des qualités.
